# EUROPEAN PATENT APPLICATION

(11) **EP 1 237 375 A1**
(43) Date of publication of application: **04.09.2002**
(21) Application number: 01105133.1
(22) Date of filing: 02.03.2001
(51) Int. Cl.: H04N 7/36

(54) **Method for picture improvement**

(71) Applicant: Sony International (Europe) GmbH, 10785 Berlin (DE)
(72) Inventor: Erdler, Oliver, Sony International (Europe) GmbH, 70327 Stuttgart (DE); Wagner, Peter, Sony International (Europe) GmbH, 70327 Stuttgart (DE)
(74) Representative: Müller - Hoffmann & Partner

(57) **Abstract**

A method for picture improvement including a motion vector field determination comprises the step of mapping a motion vector type with a small number of occurences to a motion vector type with a bigger number of occurrances.

## Description

The present invention relates to a method for picture improvement e.g. in the field of video coding and compression and/or motion compensated frame rate conversion which include a motion vector field determination. In particular, the present invention relates to a method for vector field post processing to increase the quality of motion vector fields.

Today's video coding and compression methods usually require motion estimation and compensation to provide reasonable bandwidth for transmission of video pictures. To decode and produce a video sequence the displacement vector field which describes the motion of all pixels between a given set of image plains has to be estimated. Motion estimation methods for coding and compression as well as for decoding and producing of video sequences usually do not produce fully correct vector fields. There are single and also whole areas of wrong or misleading vectors. Therefore, vector field post-processing methods are applied to remove such vectors and vector areas.

US 5,717,463 describes a method and system for estimating motion within a video sequence, wherein a preprocessor provides a first estimate of the displacement vector field and a motion analyzer improves the accuracy of this first estimate. This technique is in particular based on the estimation of object boundaries and a motion boundary estimation.

WO 97/46020 A2 shows a motion vector processing which post-processes motion vectors retrieved from an encoded image signal wherein candidate motion vectors are generated and output motion vectors are selected in dependence upon said candidate motion vectors and said retrieved motion vectors. The candidate motion vectors are selected according to spatial and/or temporal considerations. The retrieved motion vectors might be subjected to a smoothing operation which might include separate lowpass filtering operations of the horizontal and vertical components of the motion vectors or median filtering using motion vector component values of motion vectors of neighboring blocks or picture elements.

WO 97/46022 A2 concerns motion estimation, in particular the generation of candidate motion vectors which are spatial and/or temporal "prediction vectors", wherein candidate vectors are taken from a limited fixed integer update vector set.

EP 0 697 788 A2 shows an adaptive, global-motion compensated de-interlacing of sequential video fields with post-processing where the de-interlaced image is processed to remove judder artifacts that may be present in the image as a result of misclassification of the global-motion vector estimate. In particular, pixel values are selectively replaced by interpolated neighbouring pixel values in dependence upon result of correlation considerations between even lines and even and odd lines that are adjacent to each other. The selective replacement comprises replacing pixel values by average values of existing pixel values that are immediately above and below the replaced pixels.

These methods are working strictly in the spatial and/or temporal domain within a small scope, i. e. a vector is processed dependent on the surrounding neighbour vectors. Since these methods are restricted to e. g. median based block erosion methods, removal of single centers, removal of monotonically decreasing and alternating vectors or removal of double centers it is not possible to remove bigger areas with wrong or misleading vectors. This means that these areas remain in the vector field and cause interpolation artifacts when using the vector field e. g. for motion compensated interpolation.

Further, correct motion vector fields are also essential for motion compensated frame rate conversion. Therefore, the same difficulties as elucidated above arise also in this field.

It is the object underlying the present invention to improve the vector field quality, in particular by reducing the areas of erroneous vector types.

According to the present invention this object is solved by the method defined in independent claim 1. Preferred embodiments thereof are respectively defined in the following dependent claims. A computer program product according to the present invention is defined in claim 11.

The method for picture improvement including motion vector field determination according to the present invention comprises the step of mapping a motion vector type with a small number of occurrences to a motion vector type with a bigger number of occurrences.

Basically, the method according to the present invention processes a motion vector field according to a preliminary analysis step which was usually calculated before and which is part of the whole processing. According to a preferred embodiment of the present invention this analysis step includes the determination of a histogram which reflects the number of occurrences of each different vector, i.e. vector type, in the motion vector field. Wrong or misleading vector types have usually only a very small number of occurrences and can therefore be identified within the histogram and be mapped to vector types with a bigger number of occurrences.

Preferably, said mapping step is iteratively performed wherein the number of iterations is dependent on a predetermined wanted number of different vector types. The number of remaining vector types can be chosen statically, e. g. according to some experience values or to set values of a user of the system. Alternatively, the number of remaining vector types can also be determined dynamically according to a histogram analysis. For example, if the largest number of occurrences is e. g. 98 % of all vectors, it is likely that there is a camera panning or something similar. That means that there is most likely only one main motion direction and all other occurring vector types are wrong. So all vector types can be mapped to the main vector type.

Alternatively or additionally said number of iterations might be determined dependent on a smallest wanted number of vectors of a vector type. This minimum number of vectors might be the number which is necessary that a vector type remains after all iterations as a valid vector type.

According to the present invention preferably a motion vector type with a small number of occurrences is mapped to a motion vector type with a bigger number of occurrences which lies in a predetermined range of vector distances to said motion vector type with a small number of occurrences. Further preferably, a motion vector type with a small number of occurrences is mapped to the motion vector type with a bigger number of occurrences which has the smallest vector distance to said motion vector type with a small number of occurrences. Alternatively, a motion vector type with a small number of occurrences might be mapped to the motion vector type with the biggest number of occurrences within said motion vector types with a bigger number of occurrences which lie in a predetermined range of vector distances to said motion vector type with a small number of occurrences.

Therefore, a motion vector type with a small number of occurrences might preferably be mapped to the motion vector type which has the smallest vector difference. In case there are two or more vector types with the same difference, it might be mapped to the vector type thereof which shows the bigger number of occurrences.

Preferably, the vector difference is measured as an absolute distance. Of course, any other distance criterion might also be valid.

According to the present invention preferably the motion vector type with the smallest number of occurrences is mapped to a motion vector type with a bigger number of occurrences. This means, that always the vector type with the smallest number of occurrences is mapped iteratively to another vector type, e.g. to that which has the smallest vector difference.

Of course, in case of an external knowledge that vector types which are highly probably not wrongly calculated, but only have a small or the smallest number of occurrences, this vector type might be skipped from the mapping procedure.

According to the present invention preferably the number of occurrences of the mapped vector type is added to said motion vector type with a bigger number of occurrences to map a motion vector type to another motion vector type.

A computer program product according to the present invention comprises computer program means adapted to perform the method steps as defined above when it is executed on a computer, digital signal processor or the like. Preferrably, a motion compensated frame rate conversion unit is implemented in software on a digital signal processor.

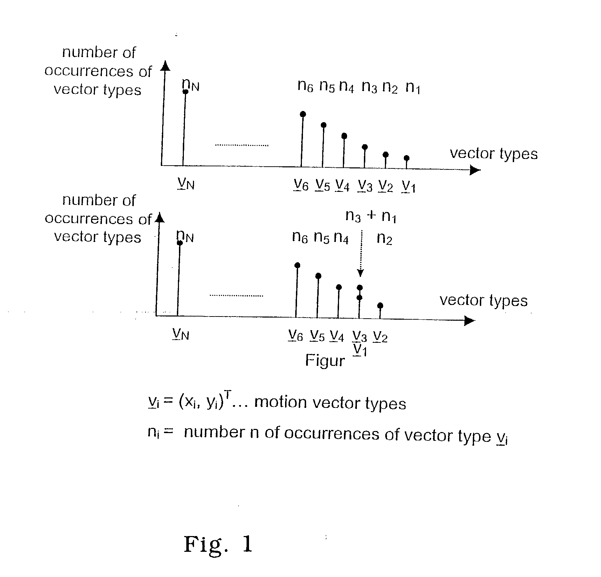

The present invention and its embodiments will be better understood from the following description of an exemplary embodiment thereof taken in conjunction with the accompanying figure 1, which shows a first iteration of the motion vector post-processing algorithm according to the present invention.

The upper part of Fig. 1 shows a motion vector histogram before the first iteration and the lower part shows said motion vector histogram after the first iteration.

In Fig. 1 v₁ is the vector type with the smallest number of occurrences, i. e. a number of occurences n₁. In the first iteration step, for this vector the differences, e.g. the absolute distances, to all other vector types v₂ to v_{N} are computed. In Fig. 1 the vector v₃ with a number of occurrences n₃ has the smallest difference, e. g. the smallest absolute distance. Therefore, vector type v₁ is mapped to vector type v₃, i. e. the number of occurrences n₁ of the mapped vector type v₁ is added to the number of occurrences n₃ of the vector type v₃ witch has the smallest difference.

According to the present invention this iteration is repeated until e.g. a predetermined number of vector types are left or the histogram shows certain characteristics. The processing results in a look-up table for the vector field which is used in the following processing step, e. g. block erosion. The remaining vector types describe the main motion directions of the image.

Therefore, according to the present invention large areas of wrong or misleading vectors can be corrected. The vector types of these areas are mapped onto the main motion directions which are described by the remaining vector types. These main motion directions can be seen as motion layers. In contrast to the state of the art post-processing techniques the present invention is working globally on the motion vector field. Another advantage is that not much computational power is required within an implementation of a motion estimation algorithm on a digital signal processor.

## Claims

1. Method for picture improvement including a motion vector field determination, **characterized by** the step of mapping a motion vector type with a small number of occurences to a motion vector type with a bigger number of ocurrances.

2. Method according to claim 1, **characterized in that** said mapping step is iteratively performed wherein the number of iterations is dependent on a predetermined wanted number of different vector types.

3. Method according to claim 1 or 2, **characterized in that** said mapping step is iteratively performed wherein the number of iterations is dependent on a smallest wanted number of vectors of a vector type.

4. Method according to anyone of the preceding claims, **characterized in that** a motion vector type with a small number of occurences is mapped to a motion vector type with a bigger number of ocurrances which lies in a predetermined range of vector differences to said motion vector type with a small number of occurences.

5. Method according to claim 4, **characterized in that** a motion vector type with a small number of occurences is mapped to the motion vector type with a bigger number of ocurrances which has the smallest vector difference to said motion vector type with a small number of occurences.

6. Method according to claim 4 or 5, **characterized in that** a motion vector type with a small number of occurences is mapped to the motion vector type with the biggest number of ocurrances within said motion vector types with a bigger number of ocurrances which lie in a predetermined range of vector differences to said motion vector type with a small number of occurences.

7. Method according to anyone of claims 4 to 6, **characterized in that** the vector difference is measured as an absolute distance.

8. Method according to anyone of the preceding claims, **characterized in that** the motion vector type with the smallest number of occurences is mapped to a motion vector type with a bigger number of ocurrances.

9. Method according to anyone of the preceding claims, **characterized in that** the number of occurences of the mapped vector type is added to said motion vector type with a bigger number of ocurrances to map a motion vector type to another motion vector type.

10. Computer program product, comprising computer program means adapted to perform the method steps as defined in anyone of claims 1 to 9 when it is executed on a computer, digital signal processor or the like.
